# EUROPÄISCHE PATENTSCHRIFT

(11) **EP 3 389 938 B1**
(45) Veröffentlichungstag und Bekanntmachung des Hinweises auf die Patenterteilung: **20.11.2019**
(21) Anmeldenummer: 15822922.9
(22) Anmeldetag: 14.12.2015
(51) Int. Cl.: B25F 5/00

(54) **MOTORBETRIEBENES HANDWERKZEUG, VERFAHREN ZUR BENUTZUNG EINES HANDWERZEUGES, KOMBINATION AUS EINEM MOTORBETRIEBENEN HANDWERKZEUG UND HANDSCHUH**
MOTOR-DRIVEN HAND-HELD TOOL, METHOD FOR USING A HAND-HELD TOOL, COMBINATION OF A MOTOR-DRIVEN HAND-HELD TOOL AND GLOVE
OUTIL À MAIN À MOTEUR, PROCÉDÉ D'UTILISATION D'UN OUTIL À MAIN, COMBINAISON D'UN OUTIL À MAIN À MOTEUR ET D'UN GANT

(43) Veröffentlichungstag der Anmeldung: 24.10.2018
(73) Patentinhaber: Gustav Klauke GmbH, 42855 Remscheid (DE)
(72) Erfinder: FRENKEN, Egbert, 52525 Heinsberg (DE)
(74) Vertreter: Müller, Enno
(86) Internationale Anmeldenummer: PCT/EP2015/079570
(87) Internationale Veröffentlichungsnummer: WO 2017/101964

(56) Entgegenhaltungen:
- EP-A2- 1 690 648
- EP-B1- 2 572 137
- DE-A1- 10 029 138
- DE-A1-102014 209 032
- US-B1- 6 427 249

## Beschreibung

Die Erfindung betrifft eine Kombination aus einem tragbaren, von Hand bedienbaren motorbetriebenen Handwerkzeug, wie insbesondere einem Schneid- oder Pressgerät, und einem Handschuh nach den Merkmalen des Anspruches 1.

Bei einem derartigen motorbetriebenen Handwerkzeug kann es sich um ein nur über einen Elektromotor betätigtes Handwerkzeug handeln, wozu bspw. auf die WO 2014/009 363 A1 verwiesen wird. Es kann sich aber auch um ein Hydraulikgerät handeln, bei welchem das Hydraulikmittel mittels einer elektrisch über einen Elektromotor angetriebenen Pumpe gefördert wird. Hierzu wird bspw. auf die WO 99/19947 (US 2001/00027676), die WO 98/24570 (US 6 065 326), die WO 02/62504 (US 2004/0107754) und die WO 02/00368 (US 2002/0148089) verwiesen.

Es handelt sich jeweils, entsprechend auch im Rahmen der Erfindung, um tragbare, von Hand bedienbare Geräte, insbesondere zum Schneiden, Stanzen oder Pressen. Die Geräte weisen einen Handgriff auf und ein Bedienungselement, vorzugsweise als niederdrückbarer Bedienungsknopf ausgebildet.

Derartige Handwerkzeuge werden auch eingesetzt, um an Stromleitungen Reparaturen durchzuführen oder Stromleitungen neu zu verlegen. Hierbei kann es vorkommen, dass eine solche Stromleitung bewusst unter Spannung steht oder versehentlich noch unter Spannung steht, wenn die Arbeiten daran durchgeführt werden. Es kann sich um eine Spannung, insbesondere Hochspannung handeln, die bspw. 5 kV oder mehr beträgt, bspw. bis hin zu 380 kV.

Zu diesem Zweck ist es bekannt, dass der Nutzer eines solchen Gerätes einen isolierenden Handschuh trägt. Es kann sich bspw. um einen Lederhandschuh oder einen Gummi- oder Kunststoffhandschuh handeln. Es kann aber vorkommen, dass ein solcher Handschuh vergessen wird oder absichtlich nicht benutzt wird. Dann wiederum ist ersichtlich die Gefahr vergleichsweise groß, dass es zu einem Unfall kommen kann.

Aus der EP 1 690 648 A2 ist es bekannt, zur Nutzung eines Handwerkzeuges ein tragbares Teil wie eine Armbanduhr, ein Armband oder ein Kartenteil, das in eine Tasche eines Kleidungsstückes eingesteckt werden kann, vorzusehen und die Betätigung von dem Vorhandensein dieses tragbaren Teils abhängig zu machen. Ein vergleichbarer Stand der Technik ist auch aus der DE 100 29138 A1 bekannt.

Aus der EP 2 572 137 A2 ist eine feststehende Bearbeitungsmaschine bekannt, bei welcher zur Verhinderung, dass ein Nutzer mit seinen Händen in den Arbeitsbereich der Maschine kommt, wobei die Maschine ausgeschaltet wird, wenn der Benutzer mit seinen Händen, erkannt durch den Handschuh, zu nahe an Arbeitsbereich kommt. Aus der US 6 427 249 B1 ist ein Handschuh als solcher bekannt. Gleiches ist auch aus der KR 2012-011905 A bekannt.

Ausgehend von einem Stand der Technik etwa gemäß der EP 2 572137 A2 beschäftigt sich die Erfindung mit der Aufgabenstellung, eine Kombination aus einem motorbetriebenen Handwerkzeug und einem Handschuh anzugeben, die einen möglichst hohen Sicherheitsstandard bei Nutzung des Handwerkzeuges erreichen lässt, etwa, wenn mit dem Handwerkzeug unter elektrischer Spannung stehende Teile bearbeitet werden sollen.

Diese Aufgabe ist beim Gegenstand des Anspruches 1 gelöst, wobei darauf abgestellt ist, dass das Handwerkzeug einen Sensor zur Erfassung des Handschuhs aufweist, dass das Handwerkzeug so ausgebildet ist, dass ein Benutzer eine Betätigung des Handwerkzeuges nur durchführen kann, wenn die Erfassung des an das Betätigungselement herangeführten Handschuhs zu einem vorbestimmten Ergebnis geführt hat, dass der Sensor einem Griffbereich des Handwerkzeugs zugeordnet ist und dass die Entfernung, in welcher der Handschuh sich befinden muss, um als vorhanden erkannt zu werden, so eingestellt ist, dass ausgeschlossen werden kann, dass das Gerät mit daneben liegendem Handschuh betrieben werden kann.

Das Handwerkzeug ist entsprechend mit einem Sensor ausgestattet, der eine Inbetriebnahme oder die Durchführung eines Arbeitsvorganges nur dann zulässt, wenn ein Teil mit einer auf den Sensor abgestimmten Eigenschaft erfasst worden ist. Dieses Teil kann insbesondere der schon genannte Handschuh sein.

Die sensormäßige Erfassung kann auf einer Funkerfassung bspw. eines in dem Handschuh befindlichen passiven Funkelementes, wie es etwa als RFID bekannt ist, beruhen. Reflektierte oder zurückgesendete Signale können dann danach ausgewertet werden, ob das Teil als zulässig betrachtet wird und in der Folge der Betrieb insgesamt oder jedenfalls die Durchführung eines Arbeitsvorgangs mit dem motorbetriebenen Handwerkzeug freizugeben ist.

Das Handwerkzeug kann auch mit einem optischen Sensor ausgestaltet sein. Insofern kann dann das Teil, also insbesondere der Handschuh, eine bestimmte optische Markierung, etwa in Form eines Barcodes oder dergleichen, aufweisen oder eine bestimmte Farbgebung, die auch in diesem Fall auf Grund von reflektierter Strahlung in dem Handwerkzeug selbst ausgewertet werden kann.

Der Sensor kann auch ein akustischer Sensor sein. Etwa, wenn durch Ultraschall oder sonstige Schallsignale das Vorhandensein eines bestimmten Materials im Griffbereich überprüft wird. Der Sensor kann weiter auch auf einen Magneten abgestellt sein. Hierbei kann der Magnet in dem Handschuh vorgesehen sein, und geräteseitig kann bspw. zur Erfassung ein sog. Hall-Sensor oder ein sog. Reed-Kontakt vorgesehen sein.

Der Sensor ist einem Griffbereich des Handwerkzeugs zugeordnet. Er kann hierbei in dem Bereich angeordnet sein, der bei Benutzung von der mit einem Handschuh überdeckten Hand eines Benutzers abgedeckt ist. Er kann aber auch im Bereich eines darüber befindlichen Geräteteils des Handwerkzeuges angeordnet sein und so auf den Griffbereich gerichtet sein, dass, von außen, die den Griffbereich umschließende Hand bzw. der darüber befindliche Handschuh, erfasst werden kann.

Dies führt entsprechend zu der verfahrensmäßigen Ausgestaltung, dass das Handwerkzeug so eingestellt wird, dass ein Benutzer eine Betätigung des Handwerkzeuges nur durchführen kann, wenn die Erfassung des Handschuhs mittels eines Sensors zu einem vorbestimmten Ergebnis geführt hat. Hierbei kann auch vorgesehen sein, dass das motorbetriebene Handwerkzeug insgesamt umstellbar ist. Also auch dahingehend, dass eine solche Abfrage nicht erfolgt bzw., wenn sie erfolgt, der Betrieb des Handwerkzeuges unabhängig ist von dem erreichten Ergebnis. Dies kann etwa dann sinnvoll sein, wenn dasselbe motorbetriebene Handwerkzeug in einem anderen Anwendungsbereich, wo es auf eine Sicherheit im Hinblick auf evtl. stromführende elektrische Leiter nicht ankommt, angewendet wird.

Im Einzelnen kann das motorbetriebene Handwerkzeug zu diesem Zweck bspw. umkodierbar vorgesehen sein. Durch eine einzugebende besondere Kennung, etwa eine Geheimzahl, kann verhindert werden, dass für solche Anwendungen, in welchen es nicht auf die genannte Sicherheit ankommt, die genannte Funktion außer Betrieb gesetzt wird.

Hinsichtlich der Kombination des motorbetriebenen Handwerkzeuges mit dem Handschuh ist in vergleichbarer Weise vorgesehen, dass das Handwerkzug einen Sensor zur Erfassung des Handschuhs aufweist und dass das Handwerkzeug so ausgebildet ist, dass ein Benutzer eine Betätigung des Handwerkzeuges nur durchführen kann, wenn die Erfassung zu einem vorbestimmten Ergebnis geführt hat.Im Einzelnen kann auch vorgesehen sein, dass der Handschuh Merkmale aufweist, etwa gegeben durch ein beispielhaft genanntes RFID, anhand dessen er individualisiert ist. Hiermit kann auch verhindert werden, dass mit einem prinzipiell gleich ausgestatteten Handschuh einer zweiten Person das motorbetriebene Handwerkzeug einer ersten Person bedient werden kann und umgekehrt.

Es kann auch weiter vorgesehen sein, dass in dem Handschuh eine Datumsangabe enthalten ist, vorzugsweise kodiert enthalten ist, und durch den Sensor das Datum jeweils ausgelesen werden kann. Hiermit kann bspw. vorgegeben sein, dass Handschuhe, die ein bestimmtes Alter überschritten haben, ungeachtet dessen, ob der Sensor sie als vorhanden erkennt, nicht mehr zu einer Inbetriebsetzung des Gerätes führen können. Somit kann auch durch evtl. Verschleiß des Handschuhs (bspw. entstehende Löcher) gegebenen Gefahren vorgebeugt werden.

Der Handschuh kann vorzugsweise aus einem widerstandsfähigen Material bestehen; zumindest außenseitig wenn, wie weiter bevorzugt, der Handschuh mehrlagig ausgebildet ist. Das widerstandsfähige Material kann bspw. Leder sein. Innenseitig kann der Handschuh mit einer zweiten Lage, bspw. aus Kunststoffmaterial, ausgebildet sein. Der Zwischenraum zwischen den Lagen kann auch ggf. günstig für eines der erwähnten Elemente, RFID-Element oder dergleichen genutzt sein.

Nachstehend ist die Erfindung des Weiteren anhand der beigefügten Zeichnung, die jedoch lediglich ein Ausführungsbeispiel darstellt, erläutert. Hierbei zeigt:
- Fig. 1: ein hydraulisch betätigtes, motorbetriebenes Schneidgerät mit einem durch die Hand eines Benutzers angedeuteten, einen Griffbereich umfassenden Handschuh; und
- Fig. 2: einen Handschuh, geeignet zur Benutzung mit dem Gerät gemäß Fig. 1, in Einzeldarstellung.

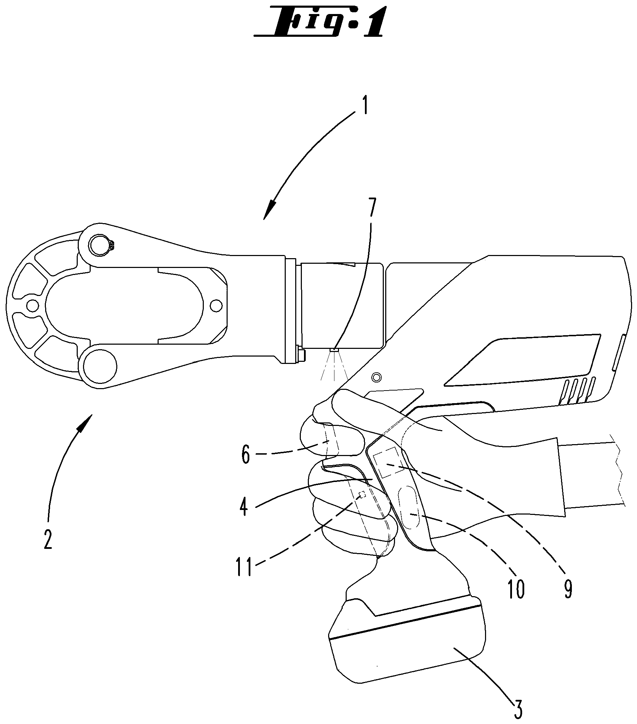

Dargestellt und beschrieben ist mit Bezug zu Figur 1 ein motorbetriebenes Handwerkzeug 1, das beim Ausführungsbeispiel einen Schneidkopf 2 aufweist. Das Handwerkzeug 1 ist im Einzelnen hydraulisch angetrieben, vermittels einer über einen Elektromotor betätigten Pumpe. Zur Spannungsversorgung des Elektromotors ist ein Akkumulator 3 vorgesehen.

Das Handwerkzeug 1 weist weiter einen Griffbereich 4 auf und, diesem zugeordnet, so dass eine umfassende Hand, ggf. eine mit einem Handschuh 5 bekleidete Hand, dieses Betätigungselement 6 erfassen kann, ein Betätigungselement 6.

Weiter ist das Handwerkzeug 1 mit einem Sensor 7 ausgestattet. Dieser Sensor kann, wie in Figur 1 angedeutet, hinsichtlich seiner Wirkrichtung auf den Griffbereich 4 hin ausgerichtet sein. Insbesondere bei einem Funksensor ist dies aber auch nicht erforderlich.

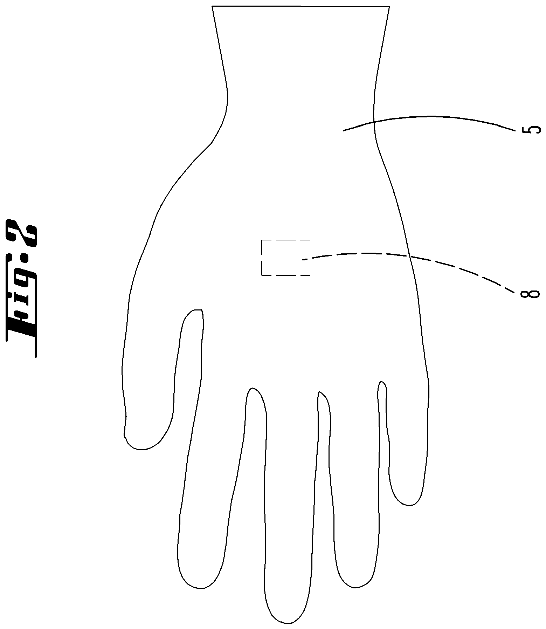

Der Handschuh 5, wie in weiterer Einzelheit in Bezug zu Figur 2 erläutert, ist beim Ausführungsbeispiel mit einem RFID 8 versehen. Der RFID kann entsprechend von dem Sensor 7 angestrahlt werden und reflektierte Strahlen können die Kodierung des RFID 8 wiedergeben, die dann in dem Lesegerät, das dem Sensor 7 zugeordnet ist, ausgewertet werden.

Unabhängig davon, ob ein Handschuh 5 bei einer versuchten Inbetriebnahme eines Handwerkzeuges 1 erkannt wird, ist natürlich die Stromversorgung des Sensors 7 immer gegeben. Die Stromversorgung der Pumpe 9 oder eines Elektromotors 10 als solchem ist aber nur dann gegeben bzw. geschaltet, wenn über den Sensor 7 erkannt wird, dass ein Handschuh vorliegt.

Hierbei kann weiter vorgesehen sein, dass die Entfernung, in welcher der Handschuh sich befinden muss, um als vorhanden erkannt zu werden, vergleichsweise gering ist, also sich etwa im Bereich von 5 bis 50 cm bewegt. Jedenfalls wird die Entfernung bevorzugt so eingestellt, dass ausgeschlossen werden kann, dass das Gerät mit einem danebenliegenden Handschuh betrieben werden kann.

In weiterer Einzelheit kann auch noch ein zusätzlicher oder alternativer Sensor 11 vorgesehen sein, der unmittelbar im Griffbereich angeordnet sein kann. Dieser kann etwa auf Berührung ausgelegt sein. Ggf. kann auch der im Griffbereich befindliche Sensor 11 die Funktion des Sensors 7 mit übernehmen.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, nämlich:

Ein motorbetriebenes Handwerkzeug, das dadurch gekennzeichnet ist, dass das Handwerkzeug 1 so ausgebildet ist, dass eine Betätigung des Handwerkzeugs 1 nur durchführbar ist, wenn eine sensormäßige Erfassung eines an das Betätigungselement herangeführten Teils zu einem vorbestimmten Ergebnis geführt hat.

Ein motorbetriebenes Handwerkzeug, das dadurch gekennzeichnet ist, dass das Handwerkzeug 1 zu einer sensormäßigen Erfassung mit einem optischen, akustischen, Funk-, Magnet- und/oder Berührungssensor ausgebildet ist.

Ein motorbetriebenes Handwerkzeug, das dadurch gekennzeichnet ist, dass zur sensormäßigen Erfassung ein Sensor 7 vorgesehen ist und dass der Sensor 7 einem Griffbereich 4 des Handwerkzeugs 1 zugeordnet ist.

Ein Verfahren zur Benutzung eines Handwerkzeugs, das dadurch gekennzeichnet ist, dass das Handwerkzeug 1 einen Sensor 7 zu einer Erfassung des Teils wie bspw. des Handschuhs 5 aufweist.

Ein Verfahren, das dadurch gekennzeichnet ist, dass das Handwerkzeug so eingestellt wird, das ein Benutzer eine Betätigung des Handwerkzeuges nur durchführen kann, wenn die Erfassung zu einem vorbestimmten Ergebnis geführt hat.

Eine Kombination aus einem motorbetriebenen Handwerkzeug und einem Teil wie einem Handschuh, welche dadurch gekennzeichnet ist, dass das Handwerkzeug 1 einen Sensor 7 zu einer Erfassung des Teils aufweist und dass das Handwerkzeug 1 so ausgebildet ist, dass ein Benutzer eine Betätigung des Handwerkzeuges 1 nur durchführen kann, wenn die Erfassung zu einem vorbestimmten Ergebnis geführt hat.

Eine Kombination, die dadurch gekennzeichnet ist, dass der Handschuh 5 individualisiert ist.

Eine Kombination, die dadurch gekennzeichnet ist, dass das vorbestimmte Ergebnis die Erfassung eines individuellen Handschuhs erfordert.

Eine Kombination, die dadurch gekennzeichnet ist, dass der Handschuh 5 eine durch den Sensor 7 erfassbare Datumsangabe aufweist und dass das vorbestimmte Ergebnis die Erfassung und Auswertung einer zulässigen Datumsangabe erfordert.

Ein Handschuh, der dadurch gekennzeichnet ist, dass der Handschuh 5 mit einem passiven Erkennungselement wie einem passiven Funkelement oder einer Form- oder Farbkennung ausgebildet ist, wobei, bevorzugt, der Handschuh zumindest außenseitig aus einem widerstandsmäßige Material wie insbesondere Ledermaterial besteht und/oder dass der Handschuh mehrlagig ausgebildet ist.

### Bezugszeichenliste:

- 1: Handwerkzeug
- 2: Schneidkopf
- 3: Akkumulator
- 4: Griffbereich
- 5: Handschuh
- 6: Betätigungselement
- 7: Sensor
- 8: RFID
- 9: Pumpe
- 10: Elektromotor
- 11: Sensor

## Patentansprüche

1. Kombination aus einem tragbaren, von Hand bedienbaren motorbetriebenen Handwerkzeug, wie insbesondere einem Schneid- oder Pressgerät, und einem Handschuh, wobei das Handwerkzeug ein Betätigungselement (6) aufweist und ein Benutzer das Handwerkzeug (1) vermittels des Handschuhs (5) nutzen kann, **dadurch gekennzeichnet, dass** das Handwerkzeug (1) einen Sensor (7) zu einer Erfassung des Handschuhs aufweist, dass das Handwerkzeug (1) so ausgebildet ist, dass ein Benutzer eine Betätigung des Handwerkzeuges (1) nur durchführen kann, wenn die Erfassung des an das Betätigungselement (6) herangeführten Handschuhs zu einem vorbestimmten Ergebnis geführt hat, dass der Sensor (7) einem Griffbereich des Handwerkzeugs (1) zugeordnet ist und dass die Entfernung, in welcher der Handschuh sich befinden muss, um als vorhanden erkannt zu werden, so eingestellt ist, dass ausgeschlossen werden kann, dass das Gerät mit daneben liegendem Handschuh betrieben werden kann.

2. Kombination nach Anspruch 1, **dadurch gekennzeichnet, dass** das Handwerkzeug (1) zu einer sensormäßigen Erfassung mit einem optischen, akustischen, Funk-, Magnet- und/oder Berührungssensor ausgebildet ist.

3. Kombination nach einem der vorhergehenden Ansprüche, **dadurch gekennzeichnet, dass** der Handschuh (5) individualisiert ist.

4. Kombination nach Anspruch 3, **dadurch gekennzeichnet, dass** das vorbestimmte Ergebnis die Erfassung des individuellen Handschuhs erfordert.

5. Kombination nach einem der Ansprüche 3 oder 4, **dadurch gekennzeichnet, dass** der Handschuh (5) eine durch den Sensor (7) erfassbare Datumsangabe aufweist und dass das vorbestimmte Ergebnis die Erfassung und Auswertung einer zulässigen Datumsangabe erfordert.

6. Handschuh (5) in einer Kombination nach einem der Ansprüche 1 bis 5, wobei der Handschuh (5) mit einem passiven Erkennungselement wie einem passiven Funkelement oder einer Form- oder Farbkennung ausgebildet ist, **dadurch gekennzeichnet, dass** in dem Handschuh eine durch einen Sensor auslesbare Datumsangabe enthalten ist.

7. Handschuh (5) nach Anspruch 6, **dadurch gekennzeichnet, dass** der Handschuh zumindest außenseitig aus einem widerstandsfähigen Material wie insbesondere Ledermaterial besteht.

8. Handschuh (5) nach einem der Ansprüche 6 oder 7, **dadurch gekennzeichnet, dass** der Handschuh mehrlagig ausgebildet ist.

9. Verwendung einer Kombination nach einem der Ansprüche 1 bis 5, wenn mit dem motorbetriebenen Handwerkzeug an mit elektrischer Spannung beaufschlagten Teilen gearbeitet werden soll.

## Claims

1. A combination of a portable, manually operable motor-driven hand-held tool, such as in particular a cutting or pressing device, and a glove, wherein the hand-held tool has an actuation element (6), and a user can use the hand-held tool (1) by means of the glove (5), **characterized in that** the hand-held tool (1) has a sensor (7) for detecting the glove, that the hand-held tool (1) is configured in such a way that a user can only actuate the hand-held tool (1) if the detection of the glove guided to the actuation element (6) has led to a predetermined result, that the sensor (7) is assigned to a handle area of the hand-held tool (1), and that the distance, at which the glove has to be in order to be detected as being present, is set in such a way that it can be ruled out that the device can be operated with a glove located next to it.

2. The combination according to claim 1, **characterized in that** the hand-held tool (1) is configured for a sensor detection by means of an optical, acoustic, radio, magnetic and/or touch sensor.

3. The combination according to one of the preceding claims, **characterized in that** the glove (5) is individualized.

4. The combination according to claim 3, **characterized in that** the predetermined result requires the detection of an individual glove.

5. The combination according to one of claims 3 or 4, **characterized in that** the glove (5) has date information, which can be detected by the sensor (7), and that the predetermined result requires the detection and evaluation of permissible date information.

6. The glove (5) in combination according to one of claims 1 to 5, wherein the glove (5) is configured with a passive detection element, such as a passive radio element or a shape or color code, **characterized in that** date information, which can be read by a sensor, is present in the glove.

7. The glove (5) according to claim 6, **characterized in that** the glove consists of a robust material, such as in particular leather material, at least on the outside.

8. The glove (5) according to one of claims 6 or 7, **characterized in that** the glove is configured of multiple layers.

9. A use of a combination according to one of claims 1 to 5, if work is to be performed by means of the motor-driven hand-held tool on parts, which carry electrical voltages.

## Revendications

1. Combinaison d'un outil à main portatif motorisé à actionnement manuel, tel qu'en particulier un outil de coupe ou de pressage, et d'un gant, dans lequel l'outil à main comporte un élément d'actionnement (6) et un utilisateur peut utiliser l'outil à main (1) au moyen du gant (5), **caractérisée en ce que** l'outil à main (1) comporte un capteur (7) pour détecter le gant, **en ce que** l'outil à main (1) est conçu de manière qu'un utilisateur ne puisse actionner l'outil à main (1) que si la détection du gant approché au niveau de l'élément d'actionnement (6) a conduit à un résultat prédéterminé, **en ce que** le capteur (7) est associé à une région de préhension de l'outil à main (1) et **en ce que** la distance à laquelle doit être placé le gant pour être détecté comme étant présent est réglée de manière à exclure que le dispositif puisse être utilisé avec le gant placé à côté de lui.

2. Combinaison selon la revendication 1, **caractérisée en ce que** l'outil à main (1) est conçu pour une détection par capteur avec un capteur optique, acoustique, radio, magnétique et/ou tactile.

3. Combinaison selon l'une des revendications précédentes, **caractérisée en ce que** le gant (5) est individualisé.

4. Combinaison selon la revendication 3, **caractérisée en ce que** le résultat prédéterminé nécessite la détection du gant individuel.

5. Combinaison selon l'une des revendications 3 ou 4, **caractérisée en ce que** le gant (5) présente une indication de date détectable par le capteur (7) et **en ce que** le résultat prédéterminé nécessite la détection et l'évaluation d'une indication de date admissible.

6. Gant (5) dans une combinaison selon l'une des revendications 1 à 5, dans lequel le gant (5) est formé avec un élément de reconnaissance passif tel qu'un élément radio passif ou une identification de forme ou de couleur, **caractérisé en ce que** le gant contient une indication de date lisible par un capteur.

7. Gant (5) selon la revendication 6, **caractérisé en ce que** le gant est constitué au moins à l'extérieur d'un matériau résistant tel que notamment du cuir.

8. Gant (5) selon l'une des revendications 6 ou 7, **caractérisé en ce que** le gant est multicouche.

9. Utilisation d'une combinaison selon l'une des revendications 1 à 5 lorsque l'outil à main motorisé doit être utilisé pour travailler sur des pièces soumises à une tension électrique.
